# EUROPÄISCHE PATENTSCHRIFT

(11) **EP 1 294 552 B1**
(45) Veröffentlichungstag und Bekanntmachung des Hinweises auf die Patenterteilung: **06.04.2005**
(21) Anmeldenummer: 01957855.8
(22) Anmeldetag: 16.06.2001
(51) Int. Cl.: B29C 45/16, B29C 45/14

(54) **VERFAHREN ZUR HERSTELLUNG EINES HYBRIDTEILS**
METHOD FOR PRODUCTION OF A HYBRID COMPONENT
PROCEDE DE PRODUCTION D'UNE PIECE HYBRIDE

(30) Priorität: 21.06.2000 DE 10029450
(43) Veröffentlichungstag der Anmeldung: 26.03.2003
(73) Patentinhaber: ITM International Tools and Moulds GmbH, 90471 Nürnberg (DE)
(72) Erfinder: BARTL, Manfred, 85049 Ingolstadt (DE); ILSE, Alfred, 90471 Nürnberg (DE)
(74) Vertreter: Helber, Friedrich G., Dipl.-Ing.
(86) Internationale Anmeldenummer: PCT/EP2001/006826
(87) Internationale Veröffentlichungsnummer: WO 2001/098052

(56) Entgegenhaltungen:
- EP-A- 0 065 220
- DE-A- 2 609 084
- DE-A- 4 011 263
- FR-A- 2 783 746
- GB-A- 698 928
- US-A- 2 732 613
- PATENT ABSTRACTS OF JAPAN vol. 8, no. 57 (M-283), 15. März 1984 (1984-03-15) -& JP 58 208029 A (MATSUSHITA DENKI SANGYO KK), 3. Dezember 1983 (1983-12-03)
- PATENT ABSTRACTS OF JAPAN vol. 15, no. 427 (M-1174), 30. Oktober 1991 (1991-10-30) -& JP 03 180311 A (TOKAI KOGYO KK), 6. August 1991 (1991-08-06) -& DATABASE WPI Week 199137 Derwent Publications Ltd., London, GB; AN 1991-271643 XP002180873 & JP 03 180311 A
- DATABASE WPI Week 198139 Derwent Publications Ltd., London, GB; AN 1981-70625D XP002180874 -& JP 56 099657 A (POLYPLASTICS KK ), 11. August 1981 (1981-08-11)

## Beschreibung

Die Erfindung betrifft ein Verfahren zur Herstellung eines Hybridteils, bei dem ein Blechteil zumindest abschnittsweise mit Kunststoff umspritzt ist.

Nach dem Stand der Technik finden insbesondere im Automobilbau zunehmend sogenannte Hybridteile Verwendung. Dabei handelt es sich um Blechteile, die im Spritzgießverfahren abschnittsweise mit Kunststoff umspritzt sind. So können Blechteile z.B. an ihrer einen Seite mit einer Versteifungsstruktur versehen werden. Solche Hybridteile weisen bei geeigneter Ausbildung eine hohe Steifigkeit auf; sie sind außerdem leicht. Hybridteile können weiterhin mit der aus der Kunststoffspritzgießtechnik bekannten Genauigkeit hergestellt werden. Damit ist es möglich, komplizierte Strukturen zu spritzen, weiche mittels der herkömmlichen Blechumformtechnik nicht herstellbar sind.

Aus DE-A-26 09 084 ist ein hybrides Montagegerüst, bestehend aus einer Metallplatte mit Kunstharzaufsätzen bekannt. Das Montagegerüst ist als tragendes Gerüst für Bauteile in einem elektrischen, elektronischen oder mechanischen Gerät angeordnet und besteht aus einer Tragplatte, die wenigstens ein Durchgangsloch besitzt. Im weiteren besteht das Montagegerüst aus einem Kunstharzaufsatz, welcher an eine erste Fläche der Tragplatte integral angeformt ist. Der Kunstharzaufsatz weist einen Abschnitt auf, in welchem das Durchgangsloch der Tragplatte eingesetzt ist und über welches dieses mit einer Kunstharzmasse an der gegenüberliegenden Fläche der Tragplatte integral verbunden wird.

Aus EP-B1-65 220 ist ein umspritzter Formkörper mit einer Metallplatte, welcher mit einer Mehrzahl durchgehender Löcher ausgebildet ist, bekannt. Der umspritzte Formkörper weist Harzteile auf, die mit in die durchgehenden Löcher gefülltem Harz verbunden sind und an der gegenüberliegenden Seiten der Metallplatte hervorragen, wobei die Harzteile eine größere planare Querschnittsoberfläche als die der durchgehenden Löcher haben und jeder Harzteil nur ein Loch abdeckt. Es ist eine Mehrzahl von jeweils einstückig mit einem der Harzteile gebildeten Harzkörpem bekannt, welche unabhängig voneinander durch den Unterschied des Wärmedehnungskoeffizienten zwischen den Harzteilen und der Metallplatte gehalten werden. Der umspritzte Formkörper weist im Weiteren nicht durch Harz verbundene Harzteile auf.

Aus DE-C2-195 06 159 ist ein Spritzgießverfahren zum Gießen eines Werkstückes mit Kunststoff bekannt. Hierzu wird ein Formwerkzeug mit einem Formhohlraum, einem Haltestift, einem Einlaß zum Einspritzen des Kunststoffes in den Formhohlraum verwendet. Der Kunststoff wird durch einen Nebeneinlaß in den Formhohlraum eingebracht. Nach Aushärten des Kunststoffes in dem Formhohlraum wird die Form getrennt und der Kunststoff entnommen.

Hybridteile haben sich gleichwohl als Karosseriebauteile im Automobilbau noch nicht durchsetzen können. Eine Anforderung besteht hier darin, daß auch die Sichtseiten, d.h. die im Montagezustand sichtbaren Seiten, mit einem aus dem spritzgegossenen Kunststoff hergestellten Überzug zu versehen sind. Damit könnte auf eine Lackierung des Hybridteils verzichtet werden. Bisher ist es nicht gelungen, einen fehlerfreien Überzug mit einer geringen Schichtdicke mit dem Blech zu verbinden.

Aufgabe der Erfindung ist es, die Nachteile nach dem Stand der Technik zu beseitigen. Es soll insbesondere ein Verfahren angegeben werden, mit dem ein einen Überzug aufweisendes Hybridteil in einwandfreier Qualität herstellbar ist.

Weiteres Ziel der Erfindung ist es, das Hybridteil möglichst billig und einfach herzustellen.
Diese Aufgabe wird durch die Merkmale des Anspruchs 1 gelöst. Zweckmäßige Ausgestaltungen ergeben sich aus den Merkmalen der Ansprüche 2 bis 16.

Nach Maßgabe der Erfindung ist ein Verfahren zur Herstellung eines Hybridteils vorgesehen, bei dem ein Blechteil zumindest abschnittsweise mit Kunststoff umspritzt ist, mit folgenden Schritten:
a) Einlegen des Blechteils in eine Formhälfte einer Spritzgießform
b) Schließen der Spritzgießform, so daß ein erster einer Oberseite des Blechteils gegenüberliegender Formhohlraum und ein zweiter einer Unterseite des Blechteils gegenüberliegender Formhohlraum voneinander abgeschottet werden,
c) Beaufschlagen der Oberseite mit Kunststoff via mindestens eines ersten Angusses zur Herstellung eines mit dem Blechteil verbundenen im wesentlichen flächigen Überzugs und anschließend
d) Beaufschlagen der Unterseite mit Kunststoff via mindestens eines zweiten Angusses zur Herstellung einer mit dem Blechteil verbundenen Versteifungsstruktur.

Indem der erste und der zweite Formhohlraum voneinander abgeschottet werden und die Beaufschlagung der Oberseite mit Kunststoff früher einsetzt als die Beaufschlagung der Unterseite mit Kunststoff wird der Vorteil erreicht, daß ein dünnwandiger Überzug auf der Oberseite des Blechteils in einwandfreier Qualität hergestellt werden kann.- Die Versteifungsstruktur erfüllt im wesentlichen Stütz-, Aussteifungs- und Haltefunktionen.

Zweckmäßigerweise wird das Blechteil beim Schritt lit. c derart mit Kunststoff beaufschlagt, daß es beim Schritt lit. d weder seine Lage ändert noch verformt wird. Vorteilhafterweise ist ein aus einem ersten Anguß austretender Kunststoffstrom unmittelbar auf die Oberfläche gerichtet, d.h. der Kunststoffstrom wird nicht parallel zur Oberseite in den ersten Formhohlraum gespritzt. Um eine Verformung des Blechs beim Aufspritzen des Kunststoffs auf die Oberseite zu unterbinden ist es zweckmäßig, den Kunststoffstrom senkrecht oder unter einem stumpfen Winkel auf die Oberseite zu richten. Nach einem weiteren Ausgestaltungsmerkmal wird beim Schritt lit. c der Überzug in einer Dicke von höchsten 3 mm aufgespritzt. Die Dicke des Überzugs kann variieren. Sie hängt insbesondere von den jeweiligen rheologischen Gegebenheiten ab.

Nach einem weiteren Ausgestaltungsmerkmal wird das Blechteil nach dem Einlegen, vorzugsweise mittels hydraulisch bewegbarer Haltemittel, klemmend in der einen Formhälfte gehalten. Es ist insbesondere bei kleineren Blechteilen auch möglich, diese magnetisch in der Formhälfte zu halten. Um eine positionsgenaues Einlegen sicherzustellen, sind am Blechteil und in der Formhälfte korrespondierend ausgebildete Fest- und Loslager vorgesehen. Diese können formseitig als Stifte und blechteilsseitig als Langlöcher ausgebildet sein. Nach einer weiteren verfahrensmäßigen Ausgestaltung wird das Blechteil - nach dem Schließen der Spritzgießform - mittels an den Formhälften angeformter Niederhalter in der Spritzgießform an Ort und Stelle gehalten.

Zur Verbindung des Überzugs mit dem Blechteil werden zweckmäßigerweise erste am Blechteil vorgesehene Durchbrüche durchspritzt, so daß einstückig mit dem Überzug hergestellte Ankerelemente gebildet sind. Zur Verbindung der Versteifungsstruktur mit dem Blechteil werden zweckmäßigerweise zweite am Blechteil vorgesehene Durchbrüche durchspritzt, so daß einstückig mit der Versteifungsstruktur hergestellte zweite Ankerelemente gebildet sind. Die auf der Ober- bzw. Unterseite anliegenden Niederhalter werden vorzugsweise so umspritzt, daß der Überzug nicht unmittelbar mit den ersten Ankerelementen und/oder die Versteifungsstruktur nicht unmittelbar mit den zweiten Ankerelementen verbunden ist/sind. Die vollständige Entkopplung des Überzugs und der Versteifungsstruktur macht die Herstellung besonders dünner Überzüge möglich.
Nach einer weiteren Ausgestaltung kann mindestens ein hydraulisch bewegbarer Schieber vor dem Schritt lit. c zum Verschließen eines dritten Durchbruchs auf die Oberseite des Blechteils gefahren werden. Der hydraulische Schieber kann vor oder während des Schritts lit. d zurückgezogen werden, so daß der dritte Durchbruch zum zweiten Formhohlraum hin geöffnet und durch diesen der durch den Rückzug des Schiebers im ersten Formhohlraum gebildete Hohlraum mit Kunststoff gefüllt wird. - Der vorgenannte hydraulische Schieber ist insbesondere dann erforderlich, wenn konstruktionsbedingt eine vollständige Trennung des Überzugs und der Versteifungsstruktur mittels der Niederhalter nicht möglich ist.

Insbesondere zur Herstellung großer Hybridteile, z.B. Frontmasken für Automobile, ist es vorteilhaft, daß mehrere Blechteile so in die Form eingelegt werden, daß darin vorgesehene Durchbrüche fluchten. Der Kunststoff durchdringt die Durchbrüche, so daß eine Verbindung zwischen den Blechteilen geschaffen ist.

Zweckmäßig ist es weiterhin, daß die Blechteile mit einer Korrosionsschutzschicht überzogen sind. Dadurch wird die Haltbarkeit des Hybridteils erhöht.

Die ersten Angüsse sind vorteilhafterweise außerhalb eines im Montagezustand sichtbaren Bereichs des Überzugs angeordnet. So wird eine einwandfreie optische Qualität der Sichtseite sichergestellt.

Nach dem Füllen des ersten und/oder zweiten Formhohlraums können vierte Formhohlräume geöffnet und darin weiterer Kunststoff eingespritzt wird. Beim weiteren Kunststoff kann es sich um einen Kunststoff mit anderen Eigenschaften, z.B. einer anderen Farbe oder einer anderen Elastizität handeln. So kann z.B. nach dem Spritzen des Überzugs ein vierter Hohlraum geöffnet und an den Überzug eine aus elastischem Kunststoff gebildete Dichtung angespritzt werden.

Nachfolgend wird ein Ausführungsbeispiel des erfindungsgemäßen Verfahrens anhand der Zeichnungen näher erläutert. Es zeigen:
- Fig.1: eine schematische Querschnittsansicht durch ein Blech vor dem ersten Spritzvorgang,
- Fig.2: das Blech nach Fig.1 nach dem ersten Spritzvorgang,
- Fig.3: das Blech gemäß Fig.2 nach dem zweiten Spritzvorgang,
- Fig.4: eine Draufsicht auf ein Hybridteil und
- Fig.5: eine schematische Querschnittsansicht eines weiteren Hybridteils.

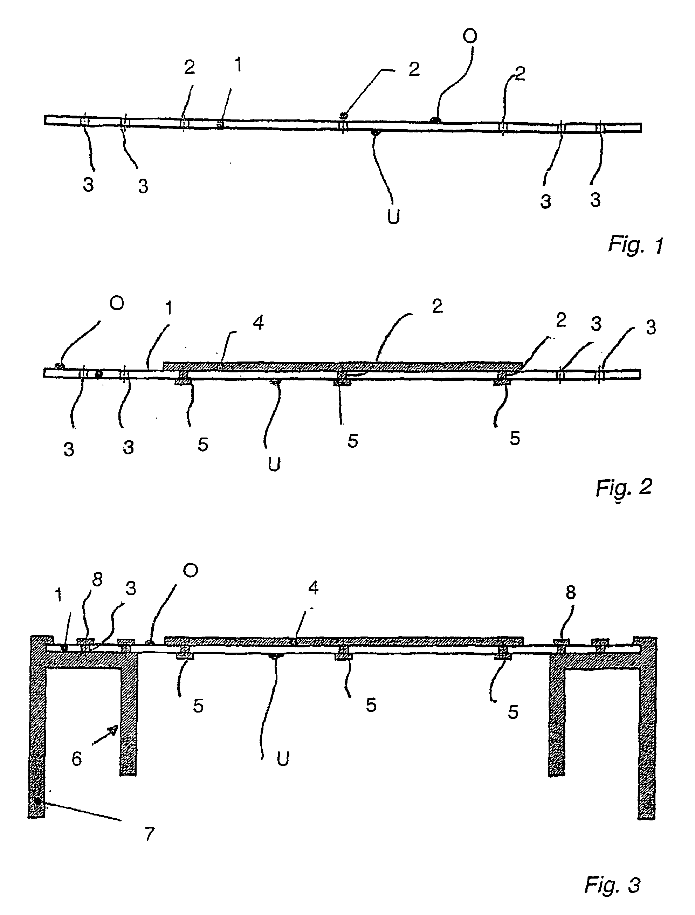

In Fig.1 ist schematisch ein Blechteil 1 im Querschnitt gezeigt. Das Blechteil 1 ist mit ersten 2 und mit zweiten Durchbrüchen 3 versehen. Eine Oberseite ist mit O und eine Unterseite mit U bezeichnet. Das Blechteil 1 ist mit einer (hier nicht gezeigten) Korrosionsschutzschicht überzogen.

In Fig.2 ist ein Überzug 4 auf das Blechteil 1 aufgespritzt. Erste nietartige Ankerelemente 5 durchgreifen die ersten Durchbrüche 2 und bilden an der Unterseite U des Blechteils 1 Verdickungen.

In Fig.3 ist die Situation nach dem Spritzen einer Versteifungsstruktur 6 an die Unterseite U gezeigt. Die Versteifungsstruktur 6 weist im wesentlichen senkrecht zur Unterseite verlaufende Rippen 7 auf. Von der Versteifungsstruktur 6 erstrecken sich durch die zweiten Durchbrüche 3 weitere nietartige Ankerelemente 8, die an der Oberseite O des Blechteils 1 weitere Verdickungen aufweisen. Wie aus Fig.3 klar ersichtlich ist, besteht zwischen dem Überzug 4 und der Versteifungsstruktur 6 keine unmittelbare Verbindung, d.h. keine aus Kunststoff gebildete Materialbrücke.

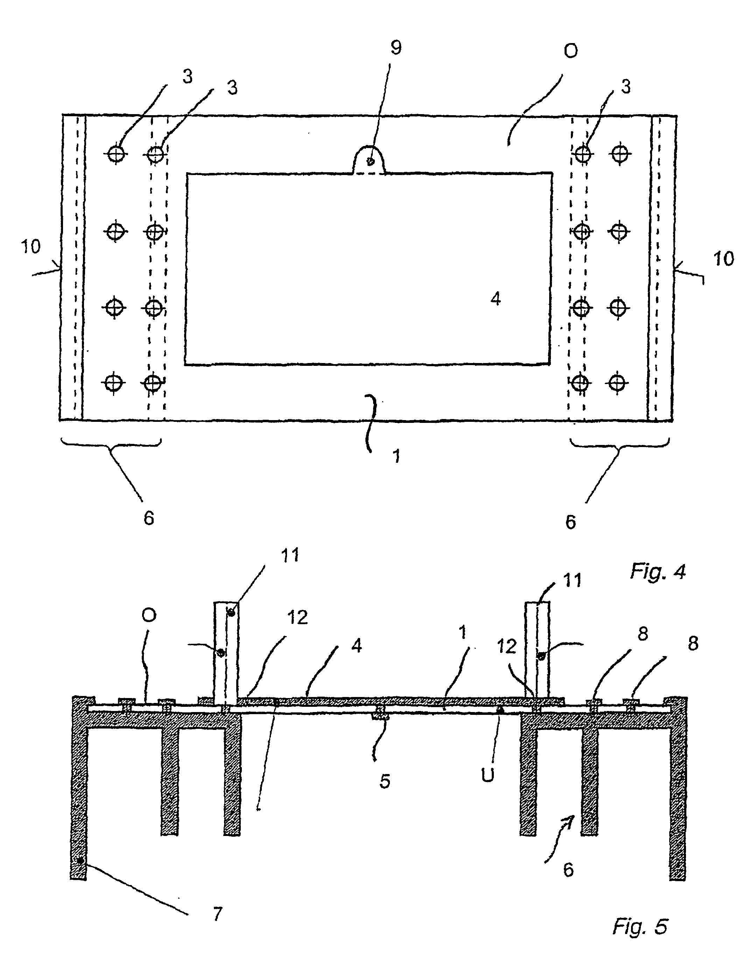

In Fig.4 ist das Blechteil 1 in Draufsicht gezeigt. Ein Sichtbereich des Überzugs 4 ist rechteckig ausgebildet. Vom Sichtbereich erstreckt sich ein zungenartiger Vorsprung. Hier befindet sich ein erster Anguß 9, der aus einer (hier nicht gezeigten) beheizten ersten Düse gebildet ist. Es können je nach Ausbildung des Größe des Überzugs selbstverständlich auch mehrere erste Angüsse vorgesehen sein. Der aus der ersten Düse austretende Strahl trifft im wesentlichen senkrecht auf die Oberseite O des Blechteils 1. Zweite Angüsse 10 sind als sogenannte Heiß-/Kaltkanäle ausgebildet. Der aus (hier nicht gezeigten) zweiten Düsen austretende Kunststoffstrahl gelangt über die Heiß-/Kaltkanäle zu einem die Versteifungsstruktur 6 umschließenden zweiten Formhohlraum.

Zur Herstellung eines erfindungsgemäßen Hybridteils wird das Blechteil 1 zunächst in eine (hier nicht gezeigte) Formhälfte einer Spritzgießform eingelegt. Zur exakten Positionierung des Blechteils sind Fest- und Loslager, z.B. in Form von an der einen Formhälfte vorgesehenen Stiften und Langlöchern am Blechteil, vorgesehen, welche beim Einlegen des Blechteils ineinandergreifen. Um das Blechteil in der Formhälfte zu halten werden anschließend an der einen Formhälfte angebrachte Haltemittel hydraulisch so auf das Blechteil bewegt, daß es klemmend gehalten wird. Die Spritzgießform wird geschlossen. Das Blechteil wird dann zusätzlich durch an den Formhälften angebrachte Niederhalter klemmend in der Spritzgießform gehalten. Ein erster den Überzug umschließender Formhohlraum ist abgeschottet von einem die Versteifungsstruktur 6 umgebenden zweiten Formhohlraum. Es wird nun via des ersten Angusses, der hier als "Heißkanal" ausgebildet ist, Kunststoff direkt auf die Oberseite O des Blechteils gespritzt.

Anschließend, zweckmäßigerweise 0,3 - 0,8 Sekunden nach dem ersten Spritzvorgang, wird via der zweiten Angüsse 10 Kunststoff in den zweiten Formhohlraum gespritzt. Der erste Formhohlraum ist früher mit Kunststoff gefüllt als der zweite Formhohlraum. Dadurch wird vermieden, daß das Blechteil 1 deformiert oder seine Lage verändert wird. Es hat sich als besonders vorteilhaft erwiesen, den aus dem Heißkanal in den ersten Formhohlraum austretenden Kunststoffstrom unmittelbar auf die Oberseite O des Blechteils 1 zu richten, und zwar zweckmäßigerweise in einem stumpfen Winkel. Die Versteifungsstruktur 6 wird demgegenüber konventionell über Heiß-/Kaltkanäle gespritzt.

Aus konstruktiven Gründen kann es sein, daß die ersten 2 und die zweiten Durchbrüche 3 so zu legen sind, daß im fertiggestellten Hybridteil eine Materialbrücke zwischen dem Überzug 4 und der Versteifungsstruktur 6 gebildet ist. Dazu werden - wie aus Fig.5 ersichtlich ist - nach dem Schließen der Form Hydraulikschieber 11 so auf die Oberseite O gefahren, daß damit dritte Durchbrüche 12 verschlossen werden. Dieser Zustand ist links in Fig. 5 gezeigt. Es wird dann wie oben erwähnt der Überzug 4 via des unmittelbar auf die Oberseite O gerichteten Heißkanals 9 gespritzt. Der Kunststoff umfließt die hydraulischen Schieber bzw. Hydraulikschieber 11. Anschließend oder nach dem Spritzen des Überzugs 4 werden die Hydraulikschieber 11 zurückgezogen. Aus dem zweiten Formhohlraum gelangt Kunststoff durch die dritten Durchbrüche 12 in den den Überzug 4 umgebenden ersten Formhohlraum. Die von den Hydraulikschiebem 11 im zurückgezogenen Zustand gebildeten Hohlräume werden gefüllt.

Als Kunststoff wird zweckmäßigerweise Polyamid mit einem Zusatz an kurzen Glasfasern oder Polypropylen mit langen Glasfasern verwendet. Es kann selbstverständlich auch jeder andere spritzgießfähige Kunststoff verwendet werden.

Das erfindungsgemäße Verfahren eignet sind insbesondere zu Herstellung hoch integrierter Hybridteile für den Automobilbau. Z.B. kann eine Frontmaske für ein Kraftfahrzeug schnell und kostengünstig hergestellt werden. Es ist möglich, an der Oberseite der Frontmaske mittels der an sich bekannten Mehrkomponententechnik Dichtungen für die Kühlerhaube anzuspritzen. Die Versteifungsstruktur kann z.B. die Aufnahme für einen Lüftungsmotor aufweisen. Ferner können in einstückiger Ausbildung elastische Aufnahmen für den Kühler vorgesehen sein. Auch Haltelaschen für Kabel- oder Kabelbäume können Bestandteil der Versteifungsstruktur sein.

### Bezugszeichenliste

- 1: Blechteil
- 2: erste Durchbrüche
- 3: zweite Durchbrüche
- 4: Überzug
- 5: erstes Ankerelement
- 6: Versteifungsstruktur
- 7: Rippe
- 8: zweites Ankerelement
- 9: erster Anguß
- 10: zweiter Anguß
- 11: Hydraulikschieber
- 12: dritter Durchbruch

- O: Oberseite
- U: Unterseite

## Patentansprüche

1. Verfahren zur Herstellung eines Hybridteils, bei dem ein Blechteil (1) zumindest abschnittsweise mit Kunststoff umspritzt ist, mit folgenden Schritten:
a) Einlegen des Blechteils (1) in eine Formhälfte einer Spritzgießform,
b) Schließen der Spritzgießform, so daß ein erster einer Oberseite (O) des Blechteils (1) gegenüberliegender Formhohlraum und ein zweiter einer Unterseite (U) des Blechteils (1) gegenüberliegender Formhohlraum voneinander abgeschottet werden,
c) Beaufschlagen der Oberseite (O) mit Kunststoff via mindestens eines ersten Angusses (9) zur Herstellung eines mit dem Blechteil (1) verbundenen im wesentlichen flächigen Überzugs (4) und anschließend
d) Beaufschlagen der Unterseite (U) mit Kunststoff via mindestens eines zweiten Angusses (10) zur Herstellung einer mit dem Blechteil (1) verbundenen Versteifungsstruktur (6).

2. Verfahren nach Anspruch 1, wobei das Blechteil (1) beim Schritt lit. c derart mit Kunststoff beaufschlagt wird, daß es beim Schritt lit. d weder seine Lage ändert noch verformt wird.

3. Verfahren nach einem der vorhergehenden Ansprüche, wobei ein aus einem ersten Anguß austretender Kunststoffstrom unmittelbar auf die Oberseite (O) gerichtet ist.

4. Verfahren nach einem der vorhergehenden Ansprüche, wobei der Kunststoffstrom senkrecht oder unter einem stumpfen Winkel auf die Oberseite (O) gerichtet ist.

5. Verfahren nach einem der vorhergehenden Ansprüche, wobei beim Schritt lit. c der Überzug (4) in einer Dicke von höchsten 3 mm aufgespritzt wird.

6. Verfahren nach einem der vorhergehenden Ansprüche, wobei das Blechteil nach dem Einlegen, vorzugsweise mittels hydraulisch bewegbarer Haltemittel, klemmend in der einen Formhälfte gehalten wird.

7. Verfahren nach einem der vorhergehenden Ansprüche, wobei das Blechteil (1) nach dem Schließen der Spritzgießform mittels an den Formhälften angeformter Niederhalter an Ort und Stelle gehalten wird.

8. Verfahren nach einem der vorhergehenden Ansprüche, wobei zur Verbindung des Überzugs (4) erste am Blechteil (1) vorgesehene Durchbrüche (2) durchspritzt werden, so daß einstückig mit dem Überzug (4) hergestellte Ankerelemente (5) gebildet sind.

9. Verfahren nach einem der vorhergehenden Ansprüche, wobei zur Verbindung der Versteifungsstruktur (6) zweite am Blechteil (1) vorgesehene Durchbrüche (3) durchspritzt werden, so daß einstückig mit der Versteifungsstruktur (6) hergestellte zweite Ankerelemente (8) gebildet sind.

10. Verfahren nach einem der vorhergehenden Ansprüche, wobei auf der Ober- (O) bzw. Unterseite (U) anliegende Niederhalter umspritzt werden, so daß der Überzug (4) nicht unmittelbar mit den zweiten Ankerelementen (8) und/oder die Versteifungsstruktur (6) nicht unmittelbar mit den ersten Ankerelementen (5) verbunden ist/sind.

11. Verfahren nach einem der vorhergehenden Ansprüche, wobei mindestens ein hydraulisch bewegbarer Schieber (11) vor dem Schritt lit. c zum Verschließen eines dritten Durchbruchs (12) auf die Oberseite (O) des Blechteils (1) gefahren wird.

12. Verfahren nach einem der vorhergehenden Ansprüche, wobei der hydraulische Schieber (11) vor oder während des Schritts lit. d zurückgezogen wird, so daß der dritte Durchbruch (12) zum zweiten Formhohlraum hin geöffnet und durch diesen der durch den Rückzug des hydraulischen Schiebers (11) im ersten Formhohlraum gebildete Hohlraum mit Kunststoff gefüllt wird.

13. Verfahren nach einem der vorhergehenden Ansprüche, wobei mehrere Blechteile (1) so in die Spritzgießform eingelegt werden, daß darin vorgesehene Durchbrüche fluchten.

14. Verfahren nach einem der vorhergehenden Ansprüche, wobei die Blechteile (1) mit einer Korrosionsschutzschicht überzogen sind.

15. Verfahren nach einem der vorhergehenden Ansprüche, wobei der erste Anguß (9) außerhalb eines im Montagezustand sichtbaren Bereichs des Überzugs (4) angeordnet ist.

16. Verfahren nach einem der vorhergehenden Ansprüche, wobei nach dem Füllen des ersten und/oder zweiten Formhohlraums vierte Formhohlräume geöffnet und darin weiterer Kunststoff eingespritzt wird.

## Claims

1. A method of manufacturing a hybrid component, in which plastic material is sprayed around a metal plate member (1), at least in sections, including the following steps:
a) Inserting the metal plate member (1) into one mould half of an injection mould,
b) Closing the injection mould so that a first mould cavity opposed to an upper side (O) of the metal plate member (1) and a second mould cavity opposed to an underside (U) of the metal plate member (1) are isolated from one another,
c) Applying plastic material to the upper side (O) via at least one first gate (9) to produce a substantially flat coating (4) connected to the metal plate member (1) and subsequently
d) Applying plastic material to the underside (U) via at least one second gate (10) to produce a reinforcing structure (6) connected to the metal plate member (1).

2. A method as claimed in claim one, which plastic material is so applied to the metal plate member (1) in step c that, in step d, it neither changes its position nor is deformed.

3. A method as claimed in one of the preceding claims, in which a first stream of plastics material discharging from a first gate is directed directly onto the surface (O).

4. A method as claimed in one of the preceding claims, in which the stream of plastics material is directed perpendicularly or at an oblique angle onto the surface (O).

5. A method as claimed in one of the preceding claims, in which the coating (4) is sprayed on in a thickness of at most 3mm in step c.

6. A method as claimed in one of the preceding claims, in which the metal plate member is held clamped in the one mould half, after insertion, preferably by means of hydraulically movable retaining means.

7. A method as claimed in one of the preceding claims, in which the metal plate member (1) is maintained in its position, after closing the injection mould by means of retainers formed on the mould halves.

8. A method as claimed in one of the preceding claims, in which in order to connect the coating (4), material is sprayed through first openings (2) provided on the metal plate member (1) so that anchor elements (5) are produced integrally with the coating (4).

9. A method as claimed in one of the preceding claims, in which, in order to connect the reinforcing structure (6), material is sprayed through second openings (3) provided on the metal plate member (1) so that second anchor elements (5) are produced integrally with the coating (4).

10. A method as claimed in one of the preceding claims, in which material is sprayed around retainers engaging the upper side (O) and the underside (U) so that the coating (4) is/ are not directly connected to the second anchor elements (8) and/or the reinforcing structure (6) is/are not directly connected to the first anchor elements (5).

11. A method as claimed in one of the preceding claims, in which at least one hydraulically moveable slider (11) is moved before step c to close a third opening (12) on the upper side (O) of the metal plate member (1).

12. A method as claimed in one of the preceding claims, in which the hydraulic slider (11) is retracted before or during step d so that the third opening (12) is opened to the second mould cavity and the space formed in the first mould cavity by the retraction of the hydraulic slider (11) is filled with plastic material through it.

13. A method as claimed in one of the preceding claims, in which a plurality of metal plate members (1) are inserted into the injection mould so that openings provided therein are in alignment.

14. A method as claimed in one of the preceding claims, in which the metal plate members (1) are coated with a corrosion-protective layer.

15. A method as claimed in one of the preceding claims, in which the first gate (9) is disposed outside a region of the coating (4) which is visible in the installed state.

16. A method as claimed in one of the preceding claims, in which, after filling the first and/ or second mould cavities, fourth mould cavities are opened and further plastic material is injected therein.

## Revendications

1. Procédé de fabrication d'une pièce hybride selon lequel une pièce en tôle (1) est du moins partiellement enrobée par une matière plastique, comprenant les étapes suivantes :
a) insertion de la pièce en tôle (1) dans une moitié d'un moule pour injection,
b) fermeture du moule pour injection de manière à séparer l'un de l'autre un premier espace creux de moule situé en regard d'une face supérieure (O) de la pièce en tôle (1) et un deuxième espace creux de moule situé en regard d'une face inférieure (U) de la pièce en tôle (1),
c) application de matière plastique sur la face supérieure (O) par l'intermédiaire d'au moins un premier culot d'injection (8) pour obtenir un revêtement (4) pour l'essentiel plan relié à la pièce en tôle (1), puis
d) application de matière plastique sur la face inférieure (U) par l'intermédiaire d'au moins un deuxième culot d'injection (10) pour obtenir une structure de raidissement (6) reliée à la pièce en tôle.

2. Procédé selon la revendication 1, lors de l'étape c) la pièce en tôle (1) étant revêtue par la matière plastique de telle sorte que lors de l'étape d) elle ne subit pas de changement de position ni de déformation.

3. Procédé selon l'une quelconque des revendications précédentes, un flux de matière plastique sortant d'un premier culot d'injection étant dirigé directement sur la face supérieure (O).

4. Procédé selon l'une quelconque des revendications précédentes, le flux de matière plastique étant dirigé perpendiculairement ou sous un angle obtus sur la face supérieure (O).

5. Procédé selon l'une quelconque des revendications précédentes, à l'étape c) le revêtement (4) étant projeté dans une épaisseur de 3 mm au maximum.

6. Procédé selon l'une quelconque des revendications précédentes, la pièce en tôle, après l'insertion, étant maintenue par serrage dans une moitié de moule de préférence à l'aide de moyens de retenue déplaçables hydrauliquement.

7. Procédé selon l'une quelconque des revendications précédentes, le pièce en tôle (1), après la fermeture du moule pour injection, étant maintenue en place au moyen de dispositifs de pressage rapportés par moulage aux moitiés de moule.

8. Procédé selon l'une quelconque des revendications précédentes, des premiers passages (2) prévus sur la pièce en tôle (2) pour l'adhésion du revêtement (4) étant traversés pour obtenir des éléments d'ancrage (5) solidaires du revêtement (4).

9. Procédé selon l'une quelconque des revendications précédentes, des deuxièmes passages (3) prévus sur la pièce en tôle (1) pour l'adhésion de la structure de raidissement (6) étant traversés pour obtenir des deuxièmes éléments d'ancrage (8) solidaires de la structure de raidissement (6).

10. Procédé selon l'une quelconque des revendications précédentes, des dispositifs de pressage appliqués sur la face supérieure (O) ou la face inférieure (U) étant enrobés de telle sorte que le revêtement (4) n'est pas relié directement aux deuxièmes éléments d'ancrage (8), et/ou la structure de raidissement (6) n'est pas reliée directement aux premiers éléments d'ancrage (5).

11. Procédé selon l'une quelconque des revendications précédentes, au moins un coulisseau (11) hydraulique étant déplacé sur la face supérieure (O) de la pièce en tôle (1) avant l'étape c) pour fermer un troisième passage (12).

12. Procédé selon l'une quelconque des revendications précédentes, le coulisseau (11) hydraulique étant retiré avant ou pendant l'étape d) de telle sorte que le troisième passage (12) est ouvert vers le deuxième espace creux de moule permettant de remplir de matière plastique l'espace creux formé dans le premier espace creux de moule par le retrait du coulisseau (11) hydraulique.

13. Procédé selon l'une quelconque des revendications précédentes, plusieurs pièces en tôle (1) étant insérées dans le moule pour injection de manière à ce que des passages prévus dans celui-ci se trouvent alignés.

14. Procédé selon l'une quelconque des revendications précédentes, les pièces en tôle (1) étant revêtues d'une couche anti-corrosion.

15. Procédé selon l'une quelconque des revendications précédentes, le premier culot d'injection (9) étant disposé à l'extérieur d'une zone du revêtement (4) visible à l'état de montage.

16. Procédé selon l'une quelconque des revendications précédentes, des quatrièmes espaces creux de moule étant ouverts pour recevoir une injection de matière plastique après le remplissage du premier et/ou du deuxième espace creux de moule.
